# EUROPÄISCHE PATENTSCHRIFT

(11) **EP 0 476 484 B1**
(45) Veröffentlichungstag und Bekanntmachung des Hinweises auf die Patenterteilung: **17.07.1996**
(21) Anmeldenummer: 91115259.3
(22) Anmeldetag: 10.09.1991
(51) Int. Cl.: H01M 10/50

(54) **Hochenergiebatterie**
High energy density battery
Batterie à haute densité d'énergie

(30) Priorität: 21.09.1990 DE 4029901
(43) Veröffentlichungstag der Anmeldung: 25.03.1992
(73) Patentinhaber: AABH PATENT HOLDINGS S.A., L-2441 Luxembourg (LU)
(72) Erfinder: Böhm, Harald, Dr.nat,Dr., W-6246 Glashütten 1 (DE); Beyermann, Gerd, Ing., W-7905 Dietenheim (DE); Bulling, Markus, Dipl.-Phys., W-7950 Biberach (DE)
(74) Vertreter: Müller-Boré & Partner Patentanwälte

(56) Entgegenhaltungen:
- EP-A- 0 312 939
- DE-A- 3 942 470
- GB-A- 2 081 000

## Beschreibung

Die Erfindung betrifft eine Hochenergiebatterie nach dem Oberbegriff des Patentanspruches 1. Eine solche Batterie ist unter anderem aus der GB-A-2 081 000 bekannt.

Hochenergiebatterien wie z.B. Na/NiCl₂- oder Na/S-Batterienarbeiten bei Temperaturen zwischen 250 und 400°C. Diese Batterien sind aus einzelnen rohrförmigen Zellen aufgebaut. Die einzelnen Zellen einer Batterie sollen auf gleicher Temperatur gehalten werden damit die Zell-Innenwiderstände gleich sind. Unterschiedliche Innenwiderstände würden zu unterschiedlichen Belastungen der einzelnen Zellen führen und damit zu unterschiedlichen Lade- und Entladezuständen der Zellen. Ungleichmäßigkeiten in den Ladezuständen innerhalb der Batterie können zu einer Lebensdauerminderung der Batterie führen.

Während eines Entladungszyklus solcher Batterien werden vor allem die inneren Bezirke der Batterie stärker erwärmt als die äußeren, da über das Gehäuse ein Wärmeabfluß gegeben ist. Während des Ladens sind vor allem die Zellen, die neben der elektrischen Heizung angeordnet sind, auf höherer Temperatur als Zellen, die weiter davon entfernt sind.

Der Innenwiderstand der Zellen führt beim Entladen zu einer Wärmeentwicklung innerhalb der Batterie. Dies kann am Beispiel einer 27kWh-Batterie mit einer Spannung von 150V und einer Kapazität von 180Ah erläutert werden:
Während einer 2-Stunden-Entladung, d.h. einer Entladung mit einem Strom von 90A muß eine Verlustleistung von ca. 2kW ständig abgeführt werden. Ein Teil der Verlustleistung kann durch die Wärmekapazität der Batterie aufgefangen werden, der Rest muß mittels einer Kühlung aus der Batterie transportiert werden.

In den Schriften DE-OS 32 47 969, 26 10 222 und 28 35 550 wie auch in der GB-A-2 081 000 z.B. werden verschiedene Möglichkeiten zur Kühlung solcher Batterien beschrieben. Allen diesen Vorschlägen ist gemeinsam, daß das Kühlmittel entlang der Zellen vorbeistreicht und so die Wärme an der gesamten Oberfläche der Zelle ausgetauscht wird. Diese Anordnungen tragen wenig dazu bei, einen Temperaturausgleich zwischen den einzelnen Zellen der Batterie zu schaffen. Der nur sehr langsam stattfindende Temperaturausgleich führt zu ungleichmäßigen Belastungen. Ein weiterer Nachteil dieser Kühlanordnungen ist ihre Kompliziertheit. So wird unter anderem ein spezielles Verteilersystem in die Batterie eingebaut, um eine gleichmäßige Luftführung entlang der Zellen zu erreichen. Die Luftverteilung innerhalb der einzelnen Kanäle zwischen den Zellen ist nicht exakt zu berechnen und muß experimentell optimiert werden. Ändern sich die Verhältnisse innerhalb der Batterie (zum Beispiel durch unterschiedliche Wärmeabfuhr über die Wände der Batterie), so muß die Luftverteilung erneut optimiert werden damit wieder eine gleichmäßige Temperaturverteilung gegeben ist. Ebenso muß die Geometrie z.B. einer Verteilerplatte bei jeder Konstruktionsänderung neu festgelegt werden.

Aufgabe der Erfindung ist es daher, eine Batterie der eingangs genannten Art anzugeben, bei der die Verlustwärme bei der Entladung der Batterie abgeführt wird, eine gleichmäßige Temperaturverteilung innerhalb der Batterie über alle Zellen hinweg beim Laden, Stillstand und Entladen gewährleistet ist und die einfach an geänderte Batteriegeometrien anpaßbar ist.
Diese Aufgabe wird durch die im Kennzeichen des Patentanspruches 1 angegebenen Merkmale gelöst.

Überraschenderweise hat sich in Versuchen herausgestellt, daß eine Abführung der Verlustwärme nicht über die gesamte Oberfläche der rohrförmigen Zelle erfolgen muß, sondern es vielmehr völlig ausreicht, wenn das Kühlmedium bzw. das Medium für den Temperaturausgleich nur einen oder beide Stirnflächenbereiche bzw. Stirnflächen der rohrförmigen Zelle umströmt. Die Aufgabe wird erfindungsgemäß dadurch gelöst, daß ein Medium zur Wärmeabführung bzw. zum Temperaturausgleich nur den oberen und/oder unteren Steinflächenbereich der rohrförmigen Einzelzellen umströmt.

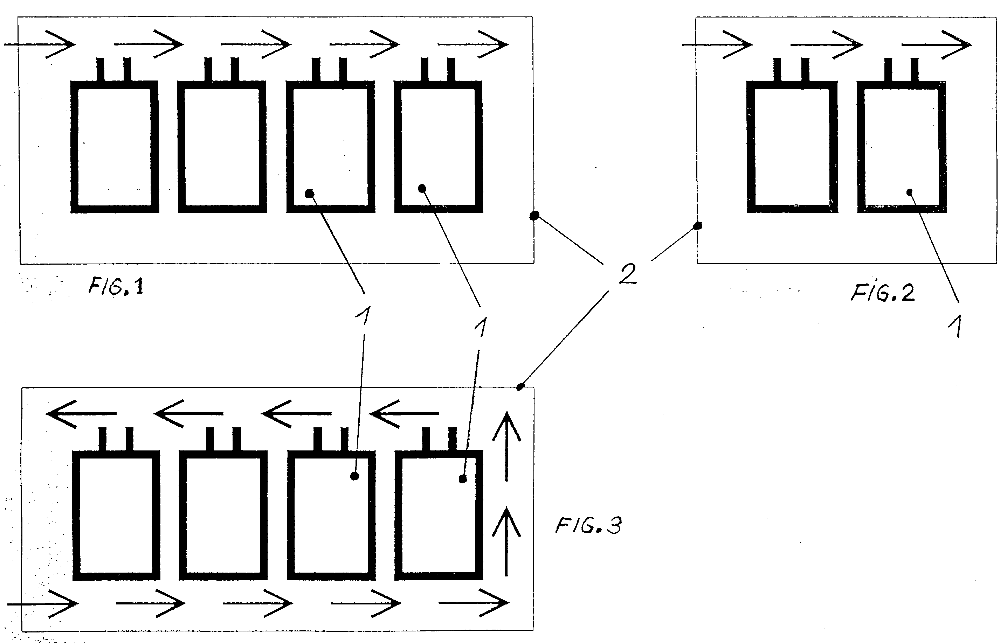

Anhand der in den Figuren 1-6 schematisch dargestellten vereinfachten Ausführungsbeispiele wird die Erfindung nachfolgend näher erklärt. Die vereinfacht dargestellte Batterie zeigt lediglich 8 einzelne hochkant stehende Zellen 1, die in zwei nebeneinanderliegenden Viererreihen innerhalb eines Gehäuses 2 angeordnet sind. Die eingezeichneten Pfeile geben die Strömungsrichtungen des die erwünschte Temperatur einregulierenden Mediums wieder. Das Gehäuse ist in bekannter Weise wärmeisolierend ausgebildet. Die Zellen 1 sind bevorzugt stabförmig ausgebildet.

In einer Hochenergiebatterie mit stabförmigen Zellen, die dicht gepackt sind, entsteht bei einer Speicherfähigkeit von 27kWh und bei 2-stündiger Entladung eine Verlustleistung von ca. 2kW. Diese Verlustleistung wird über das gesamte Volumen der Einzelzellen erzeugt. Die Wärme, die aufgrund der Verlustleistung entsteht, muß abgeführt werden, damit sich die Batterietemperatur nicht beliebig erhöht. Dies kann einfach dadurch geschehen, daß die Zellen in einen rechteckigen Batteriekasten eingestellt sind und daß die Luft von einem Ende des Kastens zum anderen in Längsrichtung über die Zellen hinweg geblasen wird (Abbildung 1). Bei dieser Anordnung kühlen die Zellen am Lufteinlaß stärker ab als am Auslaß. Für die Abführung der 2kW ist ein Luftstrom <50m^3/h erforderlich. Dabei wird angenommen, daß sich die Luft vom Einlaß zum Auslaß um ca. 150 Kelvin erwärmt.

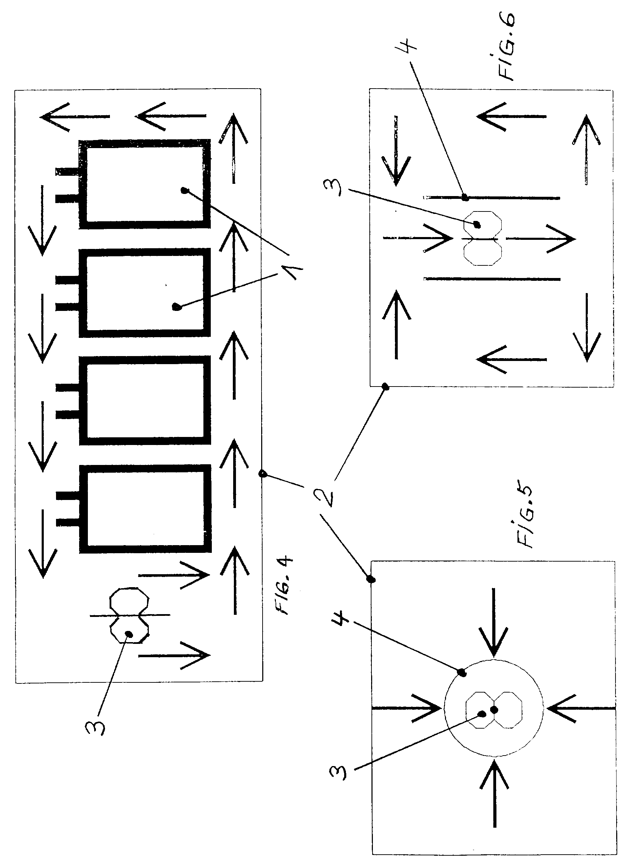

Die Temperaturdifferenz zwischen Einlaß- und Auslaßseite kann dadurch verringert werden, daß die Luft nicht in Längsrichtung, sondern in Querrichtung den Batteriekasten durchströmt (Abbildung 2).

Eine noch gleichmäßigere Temperaturverteilung kann man dadurch erreichen, daß die Luft auf einer Seite im unteren Teil des Batteriegehäuses einströmt und auf derselben Seite im oberen Teil wieder ausströmt oder umgekehrt. Die Luftführung über das Zellenpaket erfolgt dann in der Form, daß die Luft unter den Zellen zum Ende der Batterie, dann an der Rückseite nach oben geführt wird und über das Zellenpaket zur Einlaßseite geleitet wird (Abbildung 3) oder umgekehrt. Dabei werden die Zellen 2 an der Rückseite zweckmäßig an ihrer Mantelfläche gegen einen Wärmekontakt mit dem auf- bzw. abströmenden Medium isoliert, um sicherzustellen, daß auch diese hinteren Zellen ebenfalls nur an ihren Stirnflächenbereichen von dem Medium wärmemäßig beeinflußt werden. An der Einlaßseite werden die Zellen an der Unterseite stärker gekühlt, da hier die Temperatur der Luft bzw. des Kühlmediums am niedrigsten ist. An der oberen Seite werden diese Zellen weniger gekühlt, da die Luft hier bereits auf einer höheren Temperatur ist. Durch diese Luftführung wird eine weitgehend gleichmäßige Wärmeabfuhr über alle Zellen erreicht.

Bei den in den Figuren 1 bis 3 angegebenen Luftführungsarten hat man eine weitgehend gleichmäßige Strömung unter bzw. über den Zellen hinweg. Der Aufbau einer Batterie mit dieser Luftführung ist relativ einfach, da lediglich unterhalb des Zellpaketes und im rückwärtigen Teil der Batterie und zwar bevorzugt über die gesamte Breite der Batterie Raum für die Luftführung geschaffen werden muß. Oberhalb der Zellen ist aufbaubedingt ein Raum gegeben, so daß das Medium über die Zellen streichen kann. Das Prinzip dieser Kühlung ist auch beliebig an verschiedene Batteriegeometrien anpaßbar, d.h. auch quadratische Batterien bzw. sehr lange Batterien können in dieser Weise einfach mit einem Kühlmedium beaufschlagt werden.

Eine vergleichbare Art zu Führung des Kühlmediums kann auch für den Temperaturausgleich innerhalb der Batterie angewandt werden. Wie bereits erwähnt, ist es wichtig, daß alle Zellen einer Batterie sich auf gleichem Temperaturniveau befinden. Dies wird gemäß einer Weiterbildung der Erfindung dadurch erreicht, daß das Medium nicht ausgetauscht wird, wie es bei der Kühlung der Fall ist, sondern, daß das Medium im geschlossenen Kreislauf innerhalb der Batterie geführt wird. Am Beispiel eines rechteckigen Batteriegehäuses verfährt man z.B. folgendermaßen (Abbildung 4): Mit Hilfe eines Lüfters 3, der in das Batteriegehäuse 2 eingebaut ist, wird das Medium unter den Zellen hinweggeführt, an der Rückseite nach oben, über die Zellen hinweg und an der Vorderseite wieder zurück zum Lüfter geführt oder umgekehrt. Damit ergibt sich ein geschlossener Kreislauf des Mediums, der für den Temperaturausgleich innerhalb der Batterie sorgt.

Wie vorher beschrieben gilt diese Anordnung bei im Gehäuse vertikal angeordneten Zellen. Sind die Zellen horizontal angeordnet, dann erfolgt die Führung des Mediums seitlich, so daß auch hier die Stirnflächenbereiche der Zellen mit dem Medium in Berührung kommen und so eine Kühlung bzw. einen Temperaturausgleich herbeiführen können. Gemäß einem weiteren Ausführungsbeispiel hat sich auch eine Anordnung nach den Figuren 5 und 6 bewährt. In der Mitte des aufrecht stehenden Zellpaketes wird ein Leerrohr 4 angebracht. In diesem Leerrohr 4 oder in dessen Nähe wird ein Lüfter 3 installiert. Der Lüfter 3 - in diesem Fall z.B. ein Flügelrad - bläst das Medium durch das Leerrohr, worauf es unter dem Zellpaket hinweg radial nach außen geführt, an den Seiten nach oben und über den Zellen hinweg zurück zum Leerrohr 4 mit dem Lüfter 3 gelangt. Der Ventillator kann auch so angeordnet sein, daß er das Medium durch das Leerrohr saugt und sich damit die Richtung der Zirkulation des Mediums umkehrt. Diese Anordnung der Mediumführung hat sich besonders gut bewährt bei Batterien, die von der Grundfläche her eher quadratisch aufgebaut sind.

Hochenergiebatterien, die bei erhöhten Temperaturen arbeiten, müssen während der Stillstand- und Ladezeiten nachgeheizt werden, um den Wärmeabfluß über das Gehäuse zu kompensieren. Wenn diese Batterien geringe Entladeraten aufweisen, d.h. Entladungen, die länger als etwa zwei Stunden dauern, um die gesamte Kapazität der Batterie zu entladen, dann benötigt man kaum oder keine Kühlung, sondern lediglich eine Zusatzheizung, um den Wärmeabfluß über das Gehäuse zu kompensieren. In diesem Fall kann die Heizung in den aufsteigenden Medienstrom angeordnet werden und das Gebläse ggf. entfallen. Die Zirkulation des Mediums erfolgt dann allein aufgrund der Konvektion.

Bei stärker rechteckförmigen Batteriegehäusen, die kein zentrales Leerrohr haben, wird die Heizung entweder an einer Stirnseite oder an einer Seitenfläche angeordnet. Daraus ergibt sich ein Zirkulieren des Mediums um das Zellpaket herum. Bei den Batterien, die mit einem Leerrohr versehen werden, das sich in der Mitte des Zellpaketes befindet, kann die Heizung in das Leerrohr integriert werden, wodurch das Medium im Leerrohr aufsteigt und ebenfalls um das Zellpaket zirkuliert.

Die Anordnungen um das Medium zur Kühlung oder zum Temperaturausgleich über bzw. unter den Zellen hindurchzuführen, haben sich auch bewährt, wenn zwei Zellpakete übereinander angeordnet sind, z.B. vertikal stehende Zellen in zwei Ebenen. Hierbei ist es ausreichend, das Medium waagrecht zwischen den zwei Paketen hindurch und über das obere Paket hinwegzuführen, um die gesamte Batterie entsprechend zu kühlen bzw. für den entsprechenden Temperaturausgleich zu sorgen.

Es ist noch zu erwähnen, daß das angegebene System zur Kühlung bzw. zum Temperaturausgleich in Batterien auch dann geeignet ist, wenn keine rohrförmigen Stabzellen eingesetzt werden, sondern Zellen mit rechteckförmigen oder anderem Gehäusequerschnitt. Auch die Höhe der Zellen ist von untergeordnetem Einfluß. Als Medium kann am einfachsten Luft verwendet werden. Es ist aber auch möglich, flüssige Medien einzusetzen, die sich zweckmäßig in einem entsprechenden Rohrsystem befinden.

Die Zellen bzw. das Zellpaket sind dann auf einer vom Medium durchströmten Kühlplatte stehend angeordnet, zusätzlich kann eine weitere durchströmte Kühlplatte auf dem Zellpaket liegend angebracht sein. Um die Wärme auszubringen, ist außerhalb der Batterie ein Wärmetauscher vorzusehen sowie eine Pumpe, um das flüssige Medium durch dieses Rohr-/Plattensystem zu transportieren. Im Falle eines Wärmeausgleichs, der ohne Pumpe erfolgt, wird die Heizung in dem aufsteigenden Teil des Flüssigkeitssystem angebracht, d.h. an einer Stirnfläche oder an einer Seitenfläche bzw. in dem zentralen Leer-Rohr der Batterie.

Mit den Enden der Zellen sind jeweils deren obere und untere Stirnflächen bzw. Stirnflächenbereiche gemeint. Als Medium kommen sowohl gasförmige als auch flüssige Stoffe in Betracht. Gasförmige Stoffe wie z.B. Luft sind im allgemeinen bevorzugt.

## Patentansprüche

1. Hochenergiebatterie für hohe Betriebstemperaturen mit einer Vielzahl von in einem Gehäuse nebeneinander angeordneten Zellen und mit einem innerhalb des Gehäuses strömenden flüssigen oder gasförmigen Medium, zur Beeinflussung der Temperatur der einzelnen Zellen mit einem Oberflächenteilbereich der Zellen in Wärmetauschkontakt steht, dadurch gekennzeichnet, daß das Medium derart innerhalb des Gehäuses geführt ist, daß lediglich einer oder beide Stirnflächenbereiche der Zellen mit dem Medium direkt oder indirekt in Wärmetauschkontakt gebracht sind.

2. Hochenergiebatterie nach Anspruch 1, dadurch gekennzeichnet, daß die Zellen stabförmig ausgebildet sind.

3. Hochenergiebatterie nach Anspruch 1 oder 2, dadurch gekennzeichnet, daß das Medium jeweils nur einen Stirnflächenbereich der Zellen beeinflußt.

4. Hochenergiebatterie nach Anspruch 1 oder 2, dadurch gekennzeichnet, daß das Medium nur die beiden gegenüberliegenden Stirnflächenbereiche beeinflußt.

5. Hochenergiebatterie nach einem der Ansprüche 1 bis 4, dadurch gekennzeichnet, daß das Medium die Stirnflächenbereiche der Zellen direkt umströmt.

6. Hochenergiebatterie nach einem der Ansprüche 1 bis 4, dadurch gekennzeichnet, daß das Medium die Stirnflächenbereiche der Zellen indirekt, z.B. unter Zwischenfügung eines elektrisch isolierenden Materials wärmemäßig beeinflußt.

7. Hochenergiebatterie nach einem der Ansprüche 1 bis 6, dadurch gekennzeichnet, daß innerhalb des Gehäuses wenigstens ein parallel zur Längsrichtung der Zellen angeordneter Strömungskanal (4) vorgesehen ist, in dem Mittel zur Beeinflussung der Temperatur und/oder der Strömungsgeschwindigkeit des Mediums angeordnet sind.

8. Hochenergiebatterie nach einem der Ansprüche 1 bis 7, dadurch gekennzeichnet, daß das Gehäuse mit Durchführungen vorgesehen ist, die es gestatten, die Strömung und/oder die Temperatur zumindest zeitweise außerhalb des Gehäuses zu beeinflussen bzw. das Medium auszutauschen.

9. Hochenergiebatterie nach einem der Ansprüche 1 bis 7, dadurch gekennzeichnet, daß sich das Medium innerhalb des Batteriegehäuses zumindest zeitweise in einem geschlossenen Kreislauf befindet.

## Claims

1. High energy-density battery for high operating temperatures, comprising a plurality of cells arranged side by side in a housing, with a liquid or gaseous medium flowing within the housing, to influence the temperature of the individual cells, and which is in heat-exchange contact with parts of surface regions of the cells, characterized in that the medium is guided within the housing such that only one or both end face regions of the cells is/are brought into direct or indirect heat-exchanging contact with the medium.

2. High energy-density battery according to claim 1, characterized in that the cells are rod-shaped.

3. High energy-density battery according to claim 1 or claim 2, characterized in that the medium affects only the one end face region of the cells.

4. High energy-density battery according to claim 1 or claim 2, characterized in that the medium affects the two opposite end face regions.

5. High energy-density battery according to one of claims 1 to 4, characterized in that the medium flows directly around the end face regions of the cells.

6. High energy-density battery according to one of claims 1 to 4, characterized in that the medium, temperaturewise, affects the end face regions of the cells indirectly, e.g. via the interposition of an electrically insulating material.

7. High energy-density battery according to one of claims 1 to 6, characterized in that at least one flow duct (4) is provided within the housing, parallel to the longitudinal direction of the cells, in which duct means to influence the temperature and/or the flow rate of the medium is/are arranged.

8. High energy-density battery according to one of claims 1 to 7, characterized in that the housing is provided with openings via which it is possible to influence the flow and/or the temperature from outside the housing, or to exchange the medium, at least periodically.

9. High energy-density battery according to one of claims 1 to 7, characterized in that the medium within the battery housing is at least periodically in a closed circuit.

## Revendications

1. Batterie à densité d'énergie élevée pour des températures de fonctionnement élevées avec une multiplicité d'éléments disposés les uns à côté des autres dans un carter et avec un milieu liquide ou gazeux s'écoulant à l'intérieur du carter pour influer sur la température des éléments individuels, qui est en contact d'échange thermique avec une zone partielle de la surface des éléments,
caractérisée en ce que le milieu est guidé à l'intérieur du carter de telle sorte qu'uniquement l'une ou les deux zones de surface frontale des éléments sont amenées en contact d'échange thermique directement ou indirectement avec le milieu.

2. Batterie à densité d'énergie élevée selon la revendication 1,
caractérisée en ce que les éléments sont réalisés en forme de barre.

3. Batterie à densité d'énergie élevée selon la revendication 1 ou 2,
caractérisée en ce que le milieu influe chaque fois uniquement sur une zone de surface frontale des éléments.

4. Batterie à densité d'énergie élevée selon la revendication 1 ou 2,
caractérisée en ce que le milieu n'influe que sur les deux zones de surface frontales opposées.

5. Batterie à densité d'énergie élevée selon l'une des revendications 1 à 4,
caractérisée en ce que le milieu s'écoule directement autour des zones de surface frontale des éléments.

6. Batterie à densité d'énergie élevée selon l'une des revendications 1 à 4,
caractérisée en ce que le milieu influe proportionellement à la température, indirectement sur les zones de surface frontale, par exemple par l'entremise d'un matériau électriquement isolant.

7. Batterie à densité d'énergie élevée selon l'une des revendications 1 à 6,
caractérisée en ce qu'est prévu, à l'intérieur du carter, au moins un canal d'écoulement (4) disposé parallèlement à la direction longitudinale des éléments, dans lequel sont disposés des moyens pour influer sur la température et/ou la vitesse d'écoulement du milieu.

8. Batterie à densité d'énergie élevée selon l'une des revendications 1 à 7,
caractérisée en ce que le carter est muni de traversées qui permettent d'influer sur l'écoulement et/ou la température, au moins temporairement, à l'extérieur du carter ou respectivement de remplacer le milieu.

9. Batterie à densité d'énergie élevée selon l'une des revendications 1 à 7,
caractérisée en ce que le milieu à l'intérieur du carter de batterie se trouve au moins temporairement en circuit fermé.
